# EUROPÄISCHE PATENTSCHRIFT

(11) **EP 3 678 886 B1**
(45) Veröffentlichungstag und Bekanntmachung des Hinweises auf die Patenterteilung: **28.07.2021**
(21) Anmeldenummer: 18766146.7
(22) Anmeldetag: 27.08.2018
(51) Int. Cl.: B60K 23/08, B60W 30/18

(54) **VERFAHREN ZUM BETREIBEN EINES KRAFTFAHRZEUGS, INSBESONDERE EINES KRAFTWAGENS, SOWIE KRAFTFAHRZEUG**
METHOD FOR OPERATING A MOTOR VEHICLE, IN PARTICULAR A TRUCK, AND MOTOR VEHICLE
PROCÉDÉ DE FONCTIONNEMENT D'UN VÉHICULE À MOTEUR, EN PARTICULIER D'UN VÉHICULE AUTOMOBILE ET VÉHICULE À MOTEUR

(30) Priorität: 06.09.2017 DE 102017215700
(43) Veröffentlichungstag der Anmeldung: 15.07.2020
(73) Patentinhaber: Audi AG, 85045 Ingolstadt (DE)
(72) Erfinder: WEIDEMANN, Dieter, 85134 Stammham (DE); BRÜHL, Hans Jörg, 85092 Kösching (DE); HANICKEL, Heiko, 85110 Kipfenberg (DE); FRANKE, Christoph, 85095 Denkendorf (DE); CAICEDO, Francisco, 85049 Ingolstadt (DE); MAYER, Matthias, 85120 Hepberg (DE)
(86) Internationale Anmeldenummer: PCT/EP2018/073047
(87) Internationale Veröffentlichungsnummer: WO 2019/048283

(56) Entgegenhaltungen:
- US-A1- 2011 257 858

## Beschreibung

Die Erfindung betrifft ein Verfahren zum Betreiben eines Kraftfahrzeugs, insbesondere eines Kraftwagens, gemäß dem Oberbegriff von Patentanspruch 1. Ferner betrifft die Erfindung ein Kraftfahrzeug.

Ein solches Verfahren zum Betreiben eines einen zu- und abschaltbaren Vierradantrieb und eine Antriebseinrichtung aufweisenden Kraftfahrzeugs, insbesondere Kraftwagens, ist bereits der DE 10 2014 016 376 A1 als bekannt zu entnehmen. Bei dem Verfahren wird das Kraftfahrzeug während dessen Fahrt betrieben, während welcher das Kraftfahrzeug mittels eines von der Antriebseinrichtung bereitgestellten Drehmoments und somit mittels der Antriebseinrichtung angetrieben wird. Ferner wird bei dem Verfahren der zunächst abgeschaltete Vierradantrieb zugeschaltet.

Des Weiteren offenbart die DE 103 33 654 A1 eine Steuervorrichtung für ein zumindest zeitweise vierradgetriebenes Kraftfahrzeug mit einer Steuereinheit. Außerdem ist aus der DE 10 2012 222 197 A1 ein Verfahren zur Drehmomentaufteilung eines Antriebsdrehmoments auf eine Primärachse und eine Sekundärachse eines Kraftfahrzeugs bekannt.

Außerdem ist aus der US 2011/257858 A1 ein Fahrzustandssteuerungsgerät eines Fahrzeugs bekannt.

Aufgabe der vorliegenden Erfindung ist es, ein Verfahren und ein Kraftfahrzeug zu schaffen, sodass ein besonders vorteilhafter, insbesondere ein besonders effizienter, Betrieb des Kraftfahrzeugs realisierbar ist.

Diese Aufgabe wird erfindungsgemäß durch ein Verfahren mit den Merkmalen des Patentanspruchs 1 sowie durch ein Kraftfahrzeug mit den Merkmalen des Patentanspruchs 9 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Kraftfahrzeugs, insbesondere eines Kraftwagens und vorzugsweise eines Personenkraftwagens, während dessen Fahrt. Das Kraftfahrzeug weist einen zu- und abschaltbaren Vierradantrieb und eine Antriebseinrichtung auf, mittels welcher das Kraftfahrzeug antreibbar ist beziehungsweise angetrieben wird. Bei dem Verfahren wird das Kraftfahrzeug während dessen Fahrt mittels wenigstens eines von der Antriebseinrichtung bereitgestellten Drehmoments angetrieben. Der Vierradantrieb und die Antriebseinrichtung sind beispielsweise Bestandteil eines Antriebsstrangs des Kraftfahrzeugs. Das Kraftfahrzeug, insbesondere der Antriebsstrang, weist ferner beispielsweise wenigstens oder genau vier Räder auf, welche auch als Fahrzeugräder bezeichnet werden und grundsätzlich von der Antriebseinrichtung angetrieben werden können. Bei dem Verfahren wird der zunächst abgeschaltete Vierradantrieb zugeschaltet wird.

Ist der Vierradantrieb zugeschaltet beziehungsweise aktiviert, so werden während der Fahrt des Kraftfahrzeugs mit dem zugeschalteten Vierradantrieb die wenigstens oder genau vier Räder mittels der Antriebseinrichtung angetrieben, insbesondere dann, wenn eine jeweilige Kopplung beziehungsweise ein jeweiliger Kraftschluss zwischen dem jeweiligen Rad und der jeweiligen Antriebseinrichtung geschlossen ist und die Antriebseinrichtung das genannte Drehmoment bereitstellt. Das Drehmoment, welches von der Antriebseinrichtung bereitgestellt wird, um das Kraftfahrzeug beziehungsweise die Räder anzutreiben, wird beispielsweise auch als Antriebsmoment oder Antriebsdrehmoment bezeichnet und wird beispielsweise auf die Räder, welche von der Antriebseinrichtung angetrieben werden, aufgeteilt. Somit wird das Drehmoment dann, wenn der Vierradantrieb zugeschaltet beziehungsweise aktiviert ist, auf die genannten vier Räder aufgeteilt.

Ist der Vierradantrieb abgeschaltet, das heißt deaktiviert, so ist beispielsweise ein Zweiradantrieb des Kraftfahrzeugs aktiviert, sodass sich das Kraftfahrzeug in einem Zweiradbetrieb befindet. In dem Zweiradbetrieb werden von den vier grundsätzlich mittels der Antriebseinrichtung antreibbaren Räder genau zwei Räder angetrieben, insbesondere dann, wenn eine Kopplung beziehungsweise ein Kraftschluss zwischen dem jeweiligen Rad und der Antriebseinrichtung geschlossen ist und die Antriebseinrichtung das Drehmoment bereitstellt. Somit wird beispielsweise das Antriebsmoment in dem Zweiradbetrieb auf die Räder aufgeteilt, welche im Zweiradbetrieb von der Antriebseinrichtung angetrieben werden. Da der Vierradantrieb zu- und abschaltbar ist, kann bedarfsgerecht zwischen dem Vierradantrieb und dem Zweiradantrieb umgeschaltet werden.

Um nun einen besonders vorteilhaften, insbesondere einen besonders dynamischen und gleichzeitig besonders sicheren, Betrieb des Kraftfahrzeugs während dessen Fahrt realisieren zu können, ist es erfindungsgemäß vorgesehen, dass, insbesondere mittels einer elektronischen Recheneinrichtung des Kraftfahrzeugs, wenigstens ein Grenzdrehmoment ermittelt wird, welches, während der Vierradantrieb abgeschaltet ist, insbesondere höchstens, von wenigstens einem mittels der Antriebseinrichtung angetriebenen der Räder des Kraftfahrzeugs auf einen Untergrund, auf welchem das Kraftfahrzeug gefahren wird, übertragbar ist, während ein Schlupf zwischen dem wenigstens einen Rad und dem Untergrund einen vorgebbaren Schwellenwert unterschreitet.

Das Grenzdrehmoment wird auch als Grenzmoment bezeichnet und ist ein Drehmoment, welches einen Grenzwert aufweist, bei dessen Überschreiten durch das Antriebsmoment es zu einem übermäßigen Schlupf kommen könnte. Das Grenzdrehmoment ist somit beispielsweise ein von der Antriebseinrichtung bereitstellbares Drehmoment, welches den zuvor genannten Grenzwert aufweist. Der Grenzwert beziehungsweise das Grenzdrehmoment wird beispielsweise auch als Zweirad-Kraftgrenze, Zweirad-Grenze oder Zweirad-Radkraftgrenze bezeichnet.

Bei dem erfindungsgemäßen Verfahren wird ferner, insbesondere mittels der elektronischen Recheneinrichtung, eine Zuschaltzeit ermittelt beziehungsweise berechnet, welche erforderlich ist, um einen zeitlichen Verlauf des von der Antriebseinrichtung bereitgestellten Drehmoments derart einzustellen, das heißt das auch als Antriebsdrehmoment oder Antriebsmoment bezeichnete Drehmoment derart zielgerichtet zu Formen, dass das Antriebsmoment, insbesondere genau, bei zugeschaltetem Vierradantrieb das Grenzdrehmoment überschreitet.

Des Weiteren ist es bei dem erfindungsgemäßen Verfahren vorgesehen, dass, insbesondere während der Vierradantrieb noch abgeschaltet ist, ein zeitlicher Verlauf des Drehmoments, insbesondere ein Aufbau beziehungsweise eine Erhöhung des Drehmoments, das von der Antriebseinrichtung bereitgestellt wird, um das Kraftfahrzeug, insbesondere in dem Zweiradbetrieb, anzutreiben, in Abhängigkeit von der ermittelten Zuschaltzeit, insbesondere mittels der elektronischen Recheneinrichtung, eingestellt wird. Somit wird der zeitliche Verlauf des Drehmoments in Abhängigkeit von dem Grenzdrehmoment eingestellt.

Um beispielsweise den zunächst abgeschalteten Vierradantrieb zuzuschalten, wird beispielsweise wenigstens ein oder mehrere Aktoren von der elektronischen Recheneinrichtung angesteuert, um beispielsweise mittels des wenigstens einen oder der mehreren Aktoren wenigstens ein oder mehrere Schaltelemente zu bewegen. Mit anderen Worten steuert die elektronische Recheneinrichtung den wenigstens einen oder die mehreren Aktoren beispielsweise an, um wenigstens ein oder mehrere Schaltelemente von einem ersten Zustand in einen zweiten Zustand umzuschalten. In dem ersten Zustand des jeweiligen Schaltelemets ist beispielsweise der Vierradantrieb abgeschaltet. In dem zweiten Zustand des jeweiligen Schaltelements ist beispielsweise der Vierradantrieb zugeschaltet. Mit anderen Worten ist beispielsweise der jeweilige erste Zustand zum Abschalten des Vierradantriebs vorgesehen, wobei beispielsweise der jeweilige zweite Zustand zum Zuschalten beziehungsweise Aktivieren des Vierradantriebs vorgesehen ist. Die Zuschaltzeit ist dabei eine Zeitspanne oder Zeitdauer, die zum Umschalten des jeweiligen Schaltelements vom ersten Zustand in den zweiten Zustand benötigt wird. Insbesondere erstreckt sich beispielsweise die Zuschaltzeit von einem Beginn der zuvor genannten Ansteuerung bis zu einem Zeitpunkt, zu welchem das jeweilige beziehungsweise das letzte Schaltelement, insbesondere aus dem ersten Zustand kommend, den zweiten Zustand erreicht hat.

Mittels des erfindungsgemäßen Verfahrens kann beispielsweise einerseits ein besonders dynamischer Betrieb beziehungsweise eine besonders dynamische Fahrt des Kraftfahrzeugs realisiert werden, da, insbesondere während des Zweiradbetriebs, das Drehmoment besonders hoch beziehungsweise so hoch wie möglich eingestellt wird, um beispielsweise eine von dem Fahrer des Kraftfahrzeugs geforderte Antriebsdynamik zumindest nahezu erreichen und somit eine entsprechende Anforderung des Fahrers zumindest nahezu befriedigen zu können. Andererseits kann das Drehmoment (Antriebsmoment) so gering wie nötig gehalten werden, um beispielsweise, insbesondere während des Zweiradbetriebs und somit bevor der Vierradantrieb zugeschaltet ist, unerwünschte Fahrzustände wie beispielsweise einen übermäßigen Haftungsverlust vermeiden zu können.

Bei einer besonders vorteilhaften Ausführungsform der Erfindung wird, insbesondere mittels der elektronischen Recheneinrichtung, wenigstens ein von dem Fahrer des Kraftfahrzeugs angeforderter Soll-Wert des Drehmoments ermittelt. Die Anforderung des im Folgenden auch als zweiter Soll-Wert bezeichneten Soll-Werts ist beispielsweise die zuvor genannte, von dem Fahrer angeforderte Fahr- oder Antriebsdynamik. Der von dem Fahrer angeforderte Soll-Wert wird auch als Fahreranforderung oder Fahrerwunsch bezeichnet. Beispielsweise fordert der Fahrer, insbesondere während der Vierradantrieb abgeschaltet ist, zunächst einen ersten Soll-Wert des Drehmoments an, wobei der erste Soll-Wert von der Antriebseinrichtung und dem Vierradantrieb bereitgestellt werden kann und bereitgestellt wird. Mit anderen Worten wird dann der erste Soll-Wert des Drehmoments, insbesondere mittels der elektronischen Recheneinrichtung, eingestellt. Im Rahmen der Fahreranforderung erhöht beispielsweise der Fahrer seinen Wunsch von dem ersten Soll-Wert auf den gegenüber dem ersten Soll-Wert größeren zweiten Soll-Wert. Wieder mit anderen Worten ausgedrückt wünscht der Fahrer, dass infolge der Fahreranforderung die Antriebseinrichtung nicht mehr den ersten Soll-Wert, sondern den gegenüber dem ersten Soll-Wert größeren zweiten Soll-Wert bereitstellt. Dies bedeutet, dass der Fahrer den Soll-Wert einstellen kann. Der Fahrer kann den jeweiligen Soll-Wert insbesondere durch Bedienen beziehungsweise Betätigen wenigstens eines Bedienelements einstellen, indem der Fahrer das Bedienelement bedient beziehungsweise betätigt. Bei dem Bedienelement handelt es sich beispielsweise um ein auch als Fahrpedal bezeichnetes Pedal, welches von dem Fahrer mit dessen Fuß betätigt und durch in unterschiedliche Stellungen bewegt werden kann. Die jeweiligen Stellungen des Pedals korrespondieren dabei mit jeweiligen SollWerten des Drehmoments, die beziehungsweise das von der Antriebseinrichtung bereitzustellen sind beziehungsweise ist.

Des Weiteren ist es vorzugsweise vorgesehen, dass, insbesondere mittels der elektronischen Recheneinrichtung, das Drehmoment zumindest vorübergehend auf wenigstens einen gegenüber dem von dem Fahrer angeforderten zweiten Soll-Wert geringeren Ist-Wert des Drehmoments in Abhängigkeit von der ermittelten Zuschaltzeit begrenzt wird. Dieser Ausführungsform liegt insbesondere die folgende Erkenntnis zugrunde:
Bei herkömmlichen, insbesondere konventionellen, Antriebssträngen ist die Zuschaltzeit üblicherweise geringer als eine Aufbauzeit, die von der Antriebseinrichtung beziehungsweise von dem Antriebsstrang benötigt wird, um beispielsweise das Drehmoment von dem ersten Soll-Wert auf den zweiten Soll-Wert zu erhöhen. In diesem Fall kann beispielsweise das Drehmoment ohne besonderen Eingriff auf den zweiten Soll-Wert erhöht beziehungsweise eingestellt werden, insbesondere mittels einer Rampe, insbesondere auch dann, wenn das den zweiten Soll-Wert aufweisende Drehmoment in dem Zweiradbetrieb zu einem übermäßigen Haftungsverlust beziehungsweise zu einem übermäßigen Schlupf, insbesondere zwischen den angetriebenen Rädern und einem Untergrund, entlang oder auf welchem das Kraftfahrzeug gefahren wird, führt beziehungsweise führen würde. Diese Erhöhung des Drehmoments führt nicht zu unerwünschten Fahrzuständen, da dann, wenn die Erhöhung des Drehmoments abgeschlossen ist und somit das Drehmoment den zweiten Soll-Wert aufweist, bereits der Vierradantrieb zugeschaltet ist. Während des Vierradantriebs führt beispielsweise das den zweiten Soll-Wert aufweisende Drehmoment nicht zu übermäßigem Schlupf beziehungsweise Haftungsverlust. Dies bedeutet, dass bei einem konventionellen Antriebsstrang die Zuschaltung des Vierradantriebs dynamischer ist beziehungsweise dynamischer erfolgen kann als die Erhöhung des Drehmoments.

Moderne, insbesondere elektrifizierte oder elektrische, Antriebsstränge jedoch, können eine solch große Momentenaufbaudynamik aufweisen, dass die Erhöhung des von der Antriebseinrichtung bereitgestellten Drehmoments dynamischer ist beziehungsweise erfolgen kann als die Zuschaltung des zunächst abgeschalteten Vierradantriebs. Durch die Begrenzung des Drehmoments, insbesondere während des Zweiradantriebs, kann vermieden werden, dass das Drehmoment während des Zweiradbetriebs den zweiten Soll-Wert beziehungsweise einen solch großen Wert annimmt, der während des Zweiradbetrieb zu einem übermäßigen Schlupf führen würde. Wie bereits zuvor beschrieben ist es dabei vorzugsweise vorgesehen, den Ist-Wert so hoch wie möglich zu wählen beziehungsweise einzustellen, um dadurch ein besonders dynamisches Verhalten des Kraftfahrzeugs zu realisieren, jedoch wird der Ist-Wert so gering wie nötig eingestellt, um einen übermäßigen Schlupf zu vermeiden. Die auch als Momentenaufbau bezeichnete Erhöhung des Drehmoments wird somit beeinflusst und dabei insbesondere aktiv verzögert, sodass das Drehmoment den von dem Fahrer gewünschten zweiten Soll-Wert beziehungsweise einen solch großen Wert, der im Zweiradbetrieb zu einem übermäßigen Schlupf führen würde, jedoch bei zugeschaltetem Vierradanrieb nicht zu einem übermäßigen Schlupf führen würde, erst dann aufweist, wenn der Vierradantrieb zugeschaltet und somit der Zweiradbetrieb deaktiviert ist.

Ferner ist es dadurch beispielsweise möglich, den sehr effizienten Zweiradbetrieb eine möglichst lange Zeitspanne aktiviert zu lassen, sodass sich ein besonders effizienter Betrieb realisieren lässt. Die hohe Effizienz des Zweiradbetriebs beziehungsweise des Zweiradantriebs resultiert insbesondere daraus, dass dann, wenn der Vierradantrieb abgeschaltet ist, Komponenten, die zum Aktivieren des Zweiradantriebs nicht erforderlich sind, stillgelegt beziehungsweise abgeschaltet, das heißt beispielsweise vom übrigen Antriebsstrang abgekoppelt werden. Dieses Stilllegen erfordert jedoch bei einer auf das Stilllegen folgenden Zuschaltung des Vierradantriebs die zuvor genannte Zuschaltzeit, um den zunächst deaktivierten Vierradantrieb wieder zu aktivieren. Im Zweiradbetrieb jedoch kann nur ein geringeres Traktions- und Fahrdynamikpotential genutzt werden als im Vierradantrieb, da im Zweiradbetrieb nur zwei Räder, im Vierradantrieb jedoch vier Räder antreibbar sind beziehungsweise angetrieben werden. Das erfindungsgemäße Verfahren ermöglicht vor diesem Hintergrund eine gezielte und bedarfsgerechte Formung des Antriebsmoments, insbesondere des Aufbaus des Antriebsmoments, sodass ein besonders vorteilhaftes Fahrverhalten dargestellt werden kann. Insbesondere kann bei sehr dynamischen Antriebssträngen beziehungsweise Antriebsarten wie beispielsweise bei hybridisierten Systemen, elektrischen Turboladern und/oder hochdynamischen Saugmotoren ein besonders dynamisches und gleichzeitig besonders sicheres Fahrverhalten gewährleistet werden, wobei gleichzeitig ein besonders effizienter Betrieb realisiert werden kann, da ein übermäßig beziehungsweise unerwünscht frühes Zuschalten des Vierradantriebs und somit Umschalten von dem Zweiradbetrieb zu dem Vierradantrieb vermieden werden kann. Mit anderen Worten ist es möglich, die Dynamik des Antriebsstrangs zumindest nahezu beliebig zu formen, sodass auch in grundsätzlich ungünstigen Zuschaltzeit-Situationen, in denen die Zuschaltzeit länger als die Aufbauzeit ist, in dem auch als Effizienzmodus bezeichneten Zweiradbetrieb gefahren werden kann.

Dabei hat es sich als besonders vorteilhaft gezeigt, wenn das Drehmoment zumindest vor Ablauf der Zuschaltzeit auf den Ist-Wert begrenzt wird, sodass ein besonders sicheres Fahrverhalten gewährleistet werden kann.

Um eine besonders vorteilhafte Dynamik des Kraftfahrzeugs zu realisieren und beispielsweise die zuvor genannte Fahreranforderung vollumfänglich erfüllen zu können, ist es beispielsweise in weiterer Ausgestaltung der Erfindung vorgesehen, dass nach Ablauf zumindest der Zuschaltzeit eine Erhöhung des Drehmoments von dem Ist-Wert auf den Soll-Wert beziehungsweise den zweiten Soll-Wert freigegeben und das Drehmoment von dem Ist-Wert auf den Soll-Wert erhöht wird.

Um ein besonders sicheres Fahrverhalten zu realisieren, ist es in weiterer Ausgestaltung der Erfindung vorgesehen, dass nach Ablauf der Zuschaltzeit und nach Ablauf einer zusätzlichen, vorgebbaren Latenzzeit die Erhöhung freigegeben und das Drehmoment von dem Ist-Wert auf den Soll-Wert erhöht wird. Hierdurch kann sichergestellt werden, dass das Drehmoment dann und erst dann auf den Soll-Wert erhöht wird, wenn der Vierradantrieb sicher zugeschaltet ist.

Bei einer weiteren Ausführungsform der Erfindung wird das Drehmoment in Abhängigkeit von einer vorzuhaltenden Drehmomentreserve auf den Ist-Wert beschränkt.

In weiterer Ausgestaltung der Erfindung wird die Zuschaltzeit in Abhängigkeit von wenigstens einer Schließzeit ermittelt, welche zum Schließen wenigstens einer zum Zuschalten des Vierradantriebs zu schließenden Kupplung erforderlich ist. Die Kupplung wird beispielsweise geschlossen, um den Vierradantrieb zuzuschalten. Somit ist die Kupplung beispielsweise eines der zuvor genannten Schaltelemente, wobei die Kupplung zum Zuschalten des Vierradantriebs geschlossen und dadurch aus ihrem ersten Zustand in ihren zweiten Zustand geschaltet wird. Die Schließzeit kann beispielsweise empirisch durch Versuche ermittelt werden und ist beispielsweise in einer Speichereinrichtung der elektronischen Recheneinrichtung gespeichert.

Als besonders vorteilhaft hat es sich gezeigt, wenn die Zuschaltzeit in Abhängigkeit von wenigstens einer Beschleunigungszeit ermittelt wird, die erforderlich ist, um eine beispielsweise als Kardanwelle ausgebildete erste Welle des Kraftfahrzeugs, insbesondere des Antriebsstrangs, bei dem Zuschalten des Vierradantriebs von einer ersten Drehzahl auf eine solche, gegenüber der ersten Drehzahl höhere zweite Drehzahl zu beschleunigen, dass in wenigstens einer Kupplung, insbesondere in der zuvor genannten Kupplung, über welche die erste Welle beim Zuschalten des Vierradantriebs mit wenigstens einer zweiten Welle gekoppelt wird, eine Drehzahldifferenz null beträgt beziehungsweise aufgehoben wird. Hierdurch kann ein besonders komfortables Fahrverhalten gewährleistet werden.

Ein zweiter Aspekt der Erfindung betrifft ein beispielsweise als Kraftwagen, insbesondere als Personenkraftwagen, ausgebildetes Kraftfahrzeug, welches zum Durchführen eines erfindungsgemäßen Verfahrens ausgebildet ist. Vorteile und vorteilhafte Ausgestaltungen des erfindungsgemäßen Verfahrens sind als Vorteile und vorteilhafte Ausgestaltungen des erfindungsgemäßen Kraftfahrzeugs anzusehen und umgekehrt.

Das erfindungsgemäße Verfahren kann folgende Bestandteile beziehungsweise Schritte aufweisen:
- Berechnung von physikalischen Basisgrößen
   - Berechnung der Zuschaltzeit
   - Berechnung einer fahrerindividuellen, zu berücksichtigenden Querdynamik
   - Berechnung des absetzbaren Grenzdrehmoments im Zweiradbetrieb
   - Berechnung der Momentenreserve als fahrerindividuelle Beschleunigungsreserve
- Formung beziehungsweise Einstellung des Drehmoments
   - Abstimmung der Momentencharakteristik
   - Glättung des Momentensignals durch Zeittoleranz
- intelligente präventive Allradlogik zur Vermeidung von zu geringer Antriebsdynamik

Bei der Berechnung der Zuschaltzeit werden beispielsweise die folgenden vier Teilzeiten berechnet:
- Zeit, bis eine Schleppmomentenbilanz von Bauteilen, insbesondere einer Kardanwelle, des Antriebsstrangs positiv ist
- Zeit, bis die Kardanwelle auf die auch als Zieldrehzahl bezeichnete zweite Drehzahl beschleunigt ist
- Zeit, bis die beispielsweise als Trennkupplung ausgebildete und insbesondere an einer Hinterachse des Antriebsstrangs angeordnete Kupplung geschlossen ist
- Zeit, bis ein gewünschtes Allradmoment aufgebaut ist

Die Basis für eine genaue Zeitschätzung liegt beispielsweise bemessen über die Dauer, bis die Kardanwelle beziehungsweise die erste Welle die Zieldrehzahl erreicht hat. Die Dauer berechnet sich über das Wissen über den Drehzahlgradienten der Kardanwelle und der Drehzahldifferenz zwischen einer aktuellen Ist-Drehzahl und der Zieldrehzahl. Die Drehzahldifferenz kann beispielsweise aus wenigstens einem von einem Sensor bereitgestellten Sensorwert errechnet werden, wobei mittels des Sensors beispielsweise die Drehzahl der ersten Welle beziehungsweise Kardanwelle erfasst wird. Die Zieldrehzahl kann beispielsweise über die Fahrzeuggeschwindigkeit, Reifenumfang und Differentialübersetzung errechnet werden. Der Drehzahlgradient wird beispielsweise direkt vorgegeben, da die maßgebliche Größe für den Komfort des Zuschaltens ist. Daher sind alle Größen bekannt, um die Aufbauzeit, das heißt die Zeit, die erforderlich ist, bis die Kardanwelle die Zieldrehzahl erreicht, zu berechnen. Durch die Nutzung des beispielsweise als Drehzahlsensor ausgebildeten Sensors an der Kardanwelle kann durch Ableitung der Drehzahl der Drehzahlgradient ermittelt und in die Zeitberechnung miteinbezogen werden. Dadurch kann die Zeit auf Regelstörungen reagieren und korrigiert werden.

Die Zeit, bis die Schleppmomentenbilanz positiv ist, kann beispielsweise über Versuche ermittelt und in der insbesondere als Steuergerät ausgebildeten elektronischen Recheneinrichtung hinterlegt, das heißt gespeichert, werden. Da sich die Zeit, bis die Schleppmomentenbilanz positiv ist, über Bauteilalterung ändern kann, ist es vorteilhaft, die Bauteilalterung zu berücksichtigen.

Die Schließzeit ergibt sich beispielsweise aus einer Magnetabfallzeit und einer Flugzeit einer Klaue der Kupplung. Die Schließzeit ist in Versuchen ermittelbar, im Gesamten jedoch sehr klein, insbesondere im Vergleich zu der Zeit, die erforderlich ist, um die erste Welle beziehungsweise die Kardanwelle auf die zweite Drehzahl (Zieldrehzahl) zu beschleunigen. Die zuvor genannte Zeit, bis das gewünschte Allradmoment aufgebaut ist. Kann insbesondere bei einem Einsatz einer elektromechanischen Allradkupplung zum Aufbau des Allradmoments durch ein Verhältnis von notwendigem Verstellweg der Allradkupplung und möglicher Verstellgeschwindigkeit errechnet werden. Bei der Allradkupplung kommt beispielsweise ein Elektromotor, insbesondere ein BLDC-Motor zum Einsatz, mittels welchem die Allradkupplung geschlossen werden kann. Die Allradkupplung ist beispielsweise eine zusätzlich zu der zuvor genannten Kupplung vorgesehene weitere Kupplung. Unter dem Allradmoment ist beispielsweise ein Drehmoment zu verstehen, welches über das zuvor beschriebene Grenzdrehmoment hinausgeht und somit beispielsweise erst durch Zuschalten des Vierradantriebs abgesetzt werden kann, ohne dass es zu übermäßigem Schlupf kommt.

Das zuvor genannte Grenzdrehmoment ist beispielsweise abhängig von Längs- und Querkraft am jeweiligen Rad. Um einen möglichst konstanten Betrieb und unnötig häufige Umschaltvorgänge, in deren Rahmen zwischen dem Vierradbetrieb und dem Vierradantrieb umgeschaltet wird, zu vermeiden, kann beispielsweise die Querdynamik des Kraftfahrzeugs beziehungsweise des Fahrers des Kraftfahrzeugs gelernt beziehungsweise berechnet werden. Beispielsweise wird ein Filter verwendet, der die Querdynamik über Geschwindigkeit ermittelt und diesen Wert filtert. Der Wert wird eine gewisse Zeit gehalten und anschließend über einen Gradienten wieder abgebaut. Der Wert wird jedoch bis zu einer festgelegten Querdynamik über Geschwindigkeit reduziert, die die Basis darstellt, um Signalrauschen, Fahrbahnunebenheiten und leichte Kurven zu glätten.

Das absetzbare Grenzmoment berechnet sich anhand der folgenden Komponenten:
- Radaufstandskraft
- Reibwert
- Querkraft

Unter dem Attribut "absetzbar" ist zu verstehen, dass das Grenzdrehmoment gerade noch von dem jeweiligen Rad an den Untergrund übertragen werden kann, ohne dass es zu übermäßigem Schlupf beziehungsweise Haftungsverlust an dem jeweiligen Rad kommt, während der Vierradantrieb abgeschaltet ist und das jeweilige Rad mittels der Antriebseinrichtung angetrieben wird. Ist das Übertragungsverhalten des Reifens des Rads bekannt, kann aus der Radaufstandskraft und dem Reibwert eine gesamt übertragbare Kraft errechnet werden. Wird von dieser Kraft über Vektorsubtraktion die Querkraft abgezogen, ist die übertragbare Längskraft bekannt. Über den Reifenumfang ist damit das übertragbare Radmoment bekannt beziehungsweise das Grenzmoment.

Im Folgenden wird die Berechnung der Momentenreserve, das heißt der fahrerindividuellen Beschleunigungsreserve berechnet: Soll in Fahrsituationen, in denen das Verhältnis von Zuschaltzeit zu Momentendynamik beziehungsweise Aufbauzeit sehr groß ist, sodass die Zuschaltzeit und die Aufbauzeit stark unterschiedlich sind, anstelle einer übermäßigen Begrenzung des Drehmoments auf dem durch den Zweiradbetrieb realisierbaren Effizienzvorteil verzichtet werden, sodass beispielsweise besonders früh beziehungsweise prädiktiv von dem Zweiradbetrieb zu dem Vierradantrieb umgeschaltet wird. Hierzu wird beispielsweise analog zu der Querdynamik die Längsdynamik des Fahrers beziehungsweise des Kraftfahrzeugs gelernt beziehungsweise ermittelt. Zusätzlich wird über die Fahrwiderstandsgleichung eine notwendige Beschleunigungsreserve berechnet. Dies dient dazu, dem Fahrer eine gewisse Mindestbeschleunigung zuzugestehen, mit der auch ohne Zustandswechsel in den Vierradantrieb, welcher beispielsweise ein Allradantrieb ist, beschleunigt werden können muss.

Sind die Zuschaltzeiten und das Grenzdrehmoment bekannt, kann das Antriebsmoment so geformt beziehungsweise eingestellt werden, dass bei Ende der Zuschaltung des Vierradantriebs inklusive Momentenaufbau des Allradmoments das Grenzmoment erreicht wird. Auf diese Weise wird das Kraftfahrzeug in seiner Dynamik nur so weit begrenzt, dass nicht absetzbares Antriebsmoment, das heißt beispielsweise ein Unterschied beziehungsweise eine Differenz zwischen dem Grenzmoment und dem vom Fahrer gewünschten Soll-Wert, nicht freigegeben wird.

Die Formung des Antriebsmoments kann je nach Anforderung unterschiedlich durchgeführt werden:
- für maximale Radmomentenleistung kann das Antriebsmoment bis zum maximal möglichen Grenzwert freigegeben werden und anschließend gehalten werden, bis durch Zuschaltung des Vierradantriebs zusätzliches Drehmoment, das heißt beispielsweise die zuvor genannte Differenz zwischen dem Grenzdrehmoment im Zweiradbetrieb und dem vom Fahrer gewünschten Soll-Wert, übertragen werden kann
- für maximalen Komfort kann der Momentengradient konstant gehalten werden, um die Fahrzeugbeschleunigung linear aufzubauen
- alternativ kann ein typisches Turbolader-Drehmomentenaufbauverhalten modelliert werden, um dem Fahrer bekanntes Momentenaufbauverhalten zu präsentieren und den Eingriff möglichst unauffällig zu gestalten.

Die elektronische Recheneinrichtung weist beispielsweise ein erstes Steuergerät beziehungsweise ein erstes Modul auf, mittels welchem das Drehmoment eingestellt wird. Ferner weist beispielsweise die elektronische Recheneinrichtung ein zweites Steuergerät beziehungsweise ein zweites Modul auf, mittels welchem der Vierradantrieb zu- und abgeschaltet wird beziehungsweise das Allradmoment aufgebaut wird. Vorzugsweise ist eine Schnittstelle zwischen den Modulen als Momentengradient ausgeführt, um Signallaufzeiten irrelevant werden zu lassen und den Antriebsstrang bereits vor dem Übergang von dem Zweiradbetrieb zu dem Vierradantrieb in seiner Dynamik zu begrenzen.

Ist dies aus Schnittstellengründen nicht möglich, da beispielsweise keine Gradientenschnittstelle, sondern nur eine Schnittstelle als Absolutmoment vorgesehen ist, sollte das Drehmoment über einen Momentendeckel selbst entsprechend eingestellt, insbesondere gerammt, werden. Hierzu können folgende Schritte vorgesehen sein:
- Prädiktion des Moments (durch Signallaufzeit über Worst-Case-Betrachtung mehrerer Steuergeräte, sodass beispielsweise berechnet wird, wie hoch das Drehmoment ist, wenn der Eingriff erfolgt, das heißt wenn das Drehmoment gezielt eingestellt wird)
- Angleichen des Gradienten auf einen Soll-Gradienten (wenn beispielsweise der Ist-Gradient größer als der Soll-Gradient ist, sollte der Gradient sanft gesenkt werden)
- Formung
- Herausphasen des Eingriffs.

Bei der intelligenten präventiven Allradlogik zur Vermeidung von zu geringer Antriebsdynamik wird beispielsweise über die Formung des Drehmoments so lange im Zweiradbetrieb gefahren, bis das Grenzdrehmoment, welches auch als Schwelle bezeichnet wird, tatsächlich überschritten wird. Da dies jedoch einen gegebenenfalls wahrnehmbaren Unterschied zwischen einem Beschleunigungsvorgang im Zweiradbetrieb und einem Beschleunigungsvorgang bei aktiviertem Vierradantrieb zur Folge haben kann oder die Fahrzeugdynamik ungewollt beschnitten wird, werden beispielsweise die Signale der Momentenformung genutzt, um in ungewollten Grenzsituationen bereits prädiktiv von dem Zweiradantrieb zu dem Vierradantrieb umzuschalten und somit das Kraftfahrzeug mit zugeschaltetem Vierradantrieb zu fahren. Hierzu wird beispielsweise die Zuschaltzeit ein zweites Mal berechnet, jedoch stets aus Sicht des Zweiradbetriebs, bei welchem beispielsweise die Kardanwelle steht und sich die Kupplung in einer Effizienzstellung befindet, da die Kupplung beispielsweise geöffnet ist.

Je nach Fahrzustand wie beispielsweise gelernter Fahrer, Fahrprogrammschalter, Getriebestellung etc. kann nun ein Mindestgradient bestimmt und hinterlegt werden, der jederzeit garantiert werden soll. Wird die benötigte Zuschaltzeit mit dem Mindestgradient multipliziert, ergibt sich ein Differenzmoment, welches sich während der Zuschaltung maximal aufbauen kann. Übersteigt das Antriebsmoment das Grenzdrehmoment, wird der Vierradantrieb bereits prädiktiv zugeschaltet, um eine erforderliche Antriebsdynamik zu garantieren und trotzdem ein gewünschtes Fahrverhalten zu realisieren. Die Beschleunigungsreserve und die gelernte Querdynamik helfen hier, eine unnötige Abschaltung des Vierradantriebs zu verhindern, da beispielsweise bei sehr niedrigem Reibwert die Ist-Geschwindigkeit nicht gehalten werden kann und nur wegen kurzer Bergabfahrt eine Abschaltung möglich wäre. Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne zwangsläufig den Rahmen der Erfindung der allein durch die Ansprüche definiert ist, zu verlassen.

Die Zeichnung zeigt in:
- Fig. 1: eine schematische Darstellung eines Antriebsstrangs eines Kraftfahrzeugs, wobei anhand von Fig. 1 ein Verfahren zum Betreiben des Kraftfahrzeugs veranschaulicht ist;
- Fig. 2: Diagramme zum weiteren Veranschaulichen des Verfahrens; und
- Fig. 3: ein weiteres Diagramm zum weiteren Veranschaulichen des Verfahrens.

In den Figuren sind funktionsgleiche Elemente jeweils mit denselben Bezugszeichen versehen.

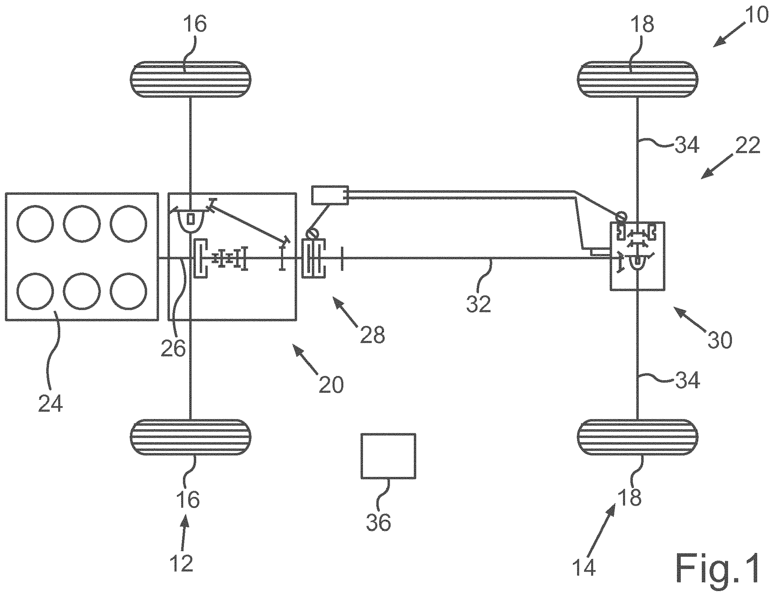

Fig. 1 zeigt in einer schematischen Darstellung einen Antriebsstrang 10 für ein Kraftfahrzeug, insbesondere für einen Kraftwagen wie beispielsweise einen Personenkraftwagen. Mittels des Antriebsstrangs 10 ist das Kraftfahrzeug antreibbar. Der Antriebsstrang 10 umfasst wenigstens zwei in Fahrzeuglängsrichtung aufeinanderfolgend beziehungsweise hintereinander angeordnete Achsen 12 und 14, wobei die Achse 12 bezogen auf die Vorwärtsfahrtrichtung des Kraftfahrzeugs als Vorderachse und die Achse 14 als Hinterachse ausgebildet ist. Die jeweilige Achse 12 beziehungsweise 14 weist ferner jeweilige Räder 16 beziehungsweise 18 auf, über welche das Kraftfahrzeug an einem Untergrund, entlang welchem das Kraftfahrzeug beispielsweise gefahren wird, abstützbar beziehungsweise abgestützt ist. Wird das Kraftfahrzeug entlang des Untergrunds gefahren, so rollen die Räder 16 und 18 ab dem Untergrund ab.

Der Antriebsstrang 10 umfasst ferner eine Antriebseinrichtung 20, mittels welcher grundsätzlich sowohl die Räder 16 als auch die Räder 18 antreibbar sind. Dabei umfasst der Antriebsstrang 10 einen auch als Allradsystem bezeichneten, zu- und abschaltbaren Vierradantrieb 22. Ist der Vierradantrieb 22 abgeschaltet, das heißt deaktiviert, so ist ein Zweiradantrieb beziehungsweise ein Zweiradbetrieb aktiviert. In dem Zweiradbetrieb ist ein Kraftschluss zwischen der Antriebseinrichtung 20 und den Rädern 16 geschlossen, und ein Kraftschluss zwischen der Antriebseinrichtung 20 und den Rädern 18 ist unterbrochen oder geöffnet, sodass während des Zweiradbetriebs die Räder 16 von der Antriebseinrichtung 20 angetrieben werden, während ein durch die Antriebseinrichtung 20 bewirktes Antreiben der Räder 18 unterbleibt. Somit stellt beispielsweise die Antriebseinrichtung 20 wenigstens ein auch als Antriebsmoment bezeichnetes Drehmoment zum Antreiben des Kraftfahrzeugs bereit. Das Abtriebsmoment wird beispielsweise in dem Zweiradbetrieb auf die Räder 16, nicht jedoch auf die Räder 18 übertragen beziehungsweise aufgeteilt.

Ist der Vierradantrieb zugeschaltet beziehungsweise aktiviert, so befindet sich der Antriebsstrang 10 in einem Vierradbetrieb, in welchem mittels der Antriebseinrichtung 20 sowohl die Räder 16 als auch die Räder 18 übertragen werden. Somit wird in dem Vierradbetrieb das von der Antriebseinrichtung 20 bereitgestellte Drehmoment sowohl auf die Räder 16 als auch auf die Räder 18 übertragen beziehungsweise aufgeteilt.

Die Antriebseinrichtung 20 umfasst hierzu beispielsweise einen Antriebsmotor 24, welcher als Verbrennungskraftmaschine ausgebildet sein kann. Der Antriebsmotor 24 weist beispielsweise eine Abtriebswelle 26 auf, über welche der Antriebsmotor 24 beziehungsweise die Antriebseinrichtung 20 das genannte Drehmoment (Antriebsmoment) bereitstellen kann.

Der Vierradantrieb 22 und somit der Antriebsstrang 10 weisen eine erste Kupplung in Form einer Allradkupplung 28 auf, welche geöffnet und geschlossen werden kann. Ferner umfasst der Vierradantrieb 22 eine an der Hinterachse angeordnete zweite Kupplung 30, welche beispielsweise als Klauenkupplung beziehungsweise Trennkupplung ausgebildet sein kann. Auch die Kupplung 30 kann beispielsweise geöffnet und geschlossen werden. Ist die jeweilige Kupplung geöffnet, so weist die jeweilige Kupplung beispielsweise einen ersten Zustand auf. Ist die jeweilige Kupplung geschlossen, so weist die jeweilige Kupplung beispielsweise einen zweiten Zustand auf.

Der Antriebsstrang 10 umfasst eine erste Welle in Form einer Kardanwelle 32 sowie zweite Wellen in Form von Seitenwellen 34. Dabei ist die Kardanwelle 32 über die Allradkupplung 28 mit der Abtriebswelle 26 koppelbar. Ferner ist die Kardanwelle 32 über die Kupplung 30 mit den Seitenwellen 34 koppelbar. Zum Abschalten des Vierradantriebs 22 werden die Kupplungen geöffnet, sodass die Kupplungen in dem Zweiradbetrieb geöffnet sind. Dadurch ist die Kardanwelle 32 sowohl von der Abtriebswelle 26 als auch von den Seitenwellen 34 entkoppelt, sodass in dem Zweiradbetrieb, während welchem die Räder 16 von der Antriebseinrichtung 20 angetrieben werden, weder von der Antriebseinrichtung 20 noch von den Rädern 18 angetrieben wird, welche an dem Untergrund abrollen. Die Kardanwelle32 ist somit eine Komponente, die dann, wenn der Vierradantrieb 22 abgeschaltet ist, stillgelegt ist. Hierdurch kann ein besonders effizienter Betrieb realisiert werden.

Ist der Vierradantrieb 22 jedoch zugeschaltet, so sind die Kupplungen geschlossen, sodass die Kardanwelle 32 über die Allradkupplung 28 von der Abtriebswelle 26 und somit von der Antriebseinrichtung 20 angetrieben wird, und sodass die Seitenwellen 34 und über diese die Räder 18 über die Kupplung 30 von der Kardanwelle 32 und über diese und über die Allradkupplung 28 von der Antriebseinrichtung 20 angetrieben werden. Um somit beispielsweise den zunächst abgeschalteten Vierradantrieb 22 zuzuschalten, das heißt zu aktivieren, werden die Kupplungen aus ihren jeweiligen ersten Zuständen in ihre jeweiligen zweiten Zustände umgeschaltet. Um beispielsweise den zunächst zugeschalteten Vierradantrieb 22 abzuschalten, werden die Kupplungen beispielsweise geöffnet und somit von ihrem zweiten Zustand in ihren ersten Zustand umgeschaltet. Da der Antriebsstrang 10 vorliegend genau die vier Räder 16 und 18 aufweist, wird der Vierradantrieb auch als Allradantrieb bezeichnet, sodass der Vierradbetrieb auch als Allradbetrieb bezeichnet wird.

Im Folgenden wird anhand der Figuren ein Verfahren zum Betreiben des Antriebsstrangs 10 und somit des Kraftfahrzeugs insgesamt beschrieben. Im Rahmen des Verfahrens wird das Kraftfahrzeug während dessen Fahrt betrieben, während welcher das Kraftfahrzeug mittels des genannten, von der Antriebseinrichtung 20 bereitgestellten Antriebsmoments angetrieben wird. Ferner wird bei dem Verfahren der zunächst abgeschaltete Vierradantrieb 22 zugeschaltet.

Um nun einen besonders dynamischen, sicheren sowie effizienten Betrieb des Kraftfahrzeugs realisieren zu können, wird bei dem Verfahren, insbesondere mittels einer in Fig. 1 besonders schematisch dargestellten elektronischen Recheneinrichtung 36 des Kraftfahrzeugs, insbesondere des Antriebsstrangs 10, wenigstens ein Grenzdrehmoment ermittelt wird, welches, während der Vierradantrieb 22 abgeschaltet ist, von wenigstens einem mittels der Antriebseinrichtung 20 angetriebenen der Räder 16 und 18 auf einen Untergrund, auf welchem das Kraftfahrzeug gefahren wird, übertragbar ist, während ein Schlupf zwischen dem wenigstens einen Rad 16 beziehungsweise 18 und dem Untergrund einen vorgebbaren Schwellenwert unterschreitet. Ferner wird mittels der elektronischen Recheneinrichtung 36 eine Zuschaltzeit Z ermittelt, insbesondere berechnet, welche erforderlich ist, um einen zeitlichen Verlauf des von der Antriebseinrichtung 20 bereitgestellten Drehmoments derart einzustellen, dass das Drehmoment bei zugeschaltetem Vierradantrieb 22 das Grenzdrehmoment überschreitet. Des Weiteren wird, insbesondere mittels der elektronischen Recheneinrichtung 36, der zeitliche Verlauf des Drehmoments in Abhängigkeit von der ermittelten Zuschaltzeit Z eingestellt.

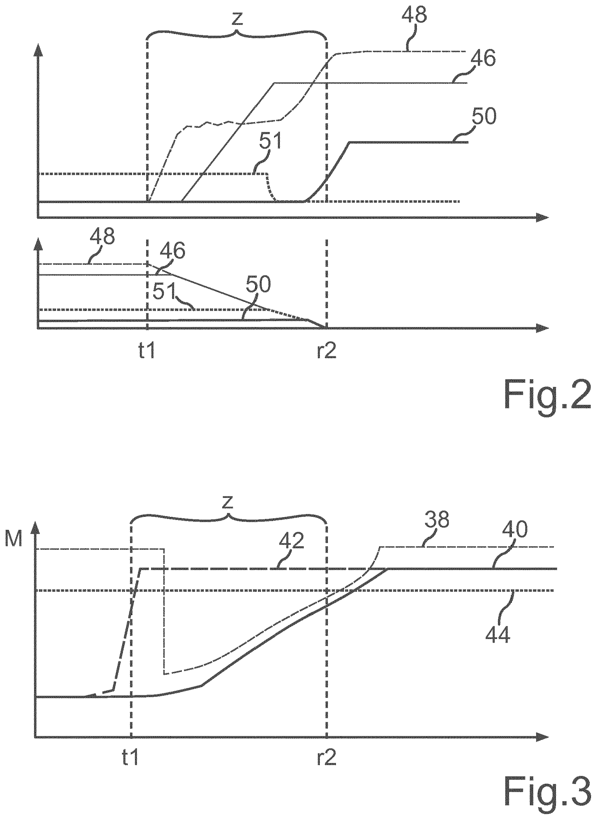

Die Zuschaltzeit umfasst beispielsweise zumindest eine Zeitspanne, die benötigt wird, um die Kupplungen aus ihren ersten Zuständen in ihre zweiten Zustände umzuschalten. Der zeitliche Verlauf ist beispielsweise in Fig. 3 gezeigt und dort mit 38 bezeichnet. Insgesamt ist erkennbar, dass der zeitliche Verlauf 38 des Antriebsmoments in Abhängigkeit von der ermittelten Zuschaltzeit Z eingestellt, das heißt geformt wird. Die Zuschaltzeit Z erstreckt sich von einem ersten Zeitpunkt t1 zu einem zweiten Zeitpunkt t2, wobei das Zuschalten des Vierradantriebs 22 bei dem ersten Zeitpunkt t1 beginnt und bei dem zweiten Zeitpunkt t2 endet beziehungsweise abgeschlossen ist. Ferner veranschaulicht in Fig. 3 ein Verlauf 40 ein Ist-Moment und ein Verlauf 42 ein Soll-Moment beziehungsweise einen Soll-Wert des Drehmoments, wobei der Soll-Wert beispielsweise von dem Fahrer des Kraftfahrzeugs angefordert wird. Ferner veranschaulicht in Fig. 3 ein Verlauf 44 das Grenzdrehmoment, welches auch als Grenzmoment bezeichnet wird. Das Grenzmoment ist das Drehmoment, welches im Zweiradbetrieb zwischen den Rädern 16 und dem Untergrund gerade noch beziehungsweise maximal übertragen werden kann, ohne dass es zu übermäßigem Schlupf zwischen den Rädern 16 und dem Untergrund kommt.

In Fig. 2 veranschaulicht ein Verlauf 46 eine Drehzahl der Kardanwelle 32, wobei ein Verlauf 48 einen Kupplungswinkel der Kupplung 28 oder der Kupplung 30 veranschaulicht. Ferner veranschaulicht ein Verlauf 51 einen sogenannten Klauenstrom, mit welchem die Kupplung 30 versorgt wird, um beispielsweise die Kupplung 30 aus dem ersten Zustand in den zweiten Zustand umzuschalten. Der Klauenstrom ist beispielsweise ein elektrischer Strom, mit welchem die Kupplung 30 versorgt wird, um beispielsweise ein als Klaue und somit als formschlüssiges Schaltelement ausgebildetes Schaltelement der Kupplung 30 zu bewegen, um diese von dem ersten Zustand in den zweiten Zustand umzuschalten. Außerdem veranschaulicht ein Verlauf 50 ein Allradmoment, welches beispielsweise erst durch Zuschalten des Vierradantriebs 22 zwischen dem Kraftfahrzeug, insbesondere den Rädern 16 und 18, übertragen werden kann, ohne dass es zu übermäßigem Schlupf kommt. Mit anderen Worten ist das Allradmoment beispielsweise eine Differenz beziehungsweise ein Differenzmoment zwischen dem genannten Grenzdrehmoment und dem zuvor genannten, von dem Fahrer gewünschten Soll-Wert des Drehmoments, wobei diese Differenz beispielsweise durch Zuschalten des Allradantriebs an die Räder 18 übertragen und über diese abgesetzt wird, sodass beispielsweise dann, wenn bei abgeschaltetem Vierradantrieb 22 der von dem Fahrer gewünschte Soll-Wert des Drehmoments größer als das Grenzdrehmoment ist, der Soll-Wert nicht oder nur bis zu dem Grenzdrehmoment befriedigt werden kann, solange der Vierradantrieb 22 noch nicht zugeschaltet ist. Erst nach Zuschalten des Vierradantriebs 22 kann beispielsweise das von der Antriebseinrichtung 20 bereitgestellte Drehmoment zum Antreiben der Räder 16 und 18 auf den vom Fahrer gewünschten Soll-Wert angehoben und somit erhöht werden, da es dann nicht zu übermäßigem Schlupf zwischen den Rädern 16 und 18 und dem Untergrund kommt.

Das Grenzdrehmoment ist somit ein Drehmoment, welches einen solchen Grenzwert aufweist, sodass das Grenzdrehmoment gerade noch beziehungsweise maximal zwischen den Rädern 16 und dem Untergrund übertragen werden kann, ohne dass es zu übermäßigem Schlupf kommt. Der Einfachheit wegen wird im Folgenden unter dem Grenzdrehmoment auch der Grenzwert verstanden und umgekehrt. Aus den Figuren ist insbesondere erkennbar, dass beispielsweise der von dem Fahrer des Kraftfahrzeugs angeforderte Soll-Wert des Drehmoments, insbesondere mittels der elektronischen Recheneinrichtung 36, ermittelt wird.

Wird beispielsweise ermittelt, dass der von dem Fahrer gewünschte Soll-Wert größer als das Grenzdrehmoment beziehungsweise der Grenzwert ist, so kann während des Zweiradbetriebs der Soll-Wert des Drehmoments nicht eingestellt werden, da es dann zu übermäßigem Schlupf kommen würde. In der Folge wird das von der Antriebseinrichtung 20 bereitgestellte Drehmoment zumindest vorübergehend auf einen gegenüber dem vom Fahrer gewünschten Soll-Wert geringeren Ist-Wert des Drehmoments in Abhängigkeit von der ermittelten Zuschaltzeit begrenzt. Zumindest nach Ablauf der Zuschaltzeit wird beispielsweise das Drehmoment von dem Ist-Wert auf den Soll-Wert erhöht beziehungsweise angehoben, sodass beispielsweise dann und erst dann der Soll-Wert eingestellt und somit dann und erst dann dem Wunsch des Fahrers entsprochen wird, wenn der Vierradantrieb 22 sicher zugeschaltet ist und es zu keinem übermäßigen Schlupf kommt. Hierdurch kann beispielsweise das von der Antriebseinrichtung 20 bereitgestellte Drehmoment vor Ablauf der Zuschaltzeit hinreichend groß jedoch nicht übermäßig groß eingestellt werden, sodass eine besonders vorteilhafte Dynamik und gleichzeitig ein besonders sicherer Betrieb realisierbar sind.

Der Vorteil des Verfahrens kann besonders gut aus Fig. 3 erkannt werden. Beispielsweise veranschaulicht der Verlauf 40 das sich einstellende Istdrehmoment, während der Verlauf 38 das Eingriffsdrehmoment beziehungsweise dessen zeitlicher Verlauf veranschaulicht, welches mittels des Verfahrens eingestellt wird. Anhand des Verlaufs 38 ist erkennbar, dass das Drehmoment, welches auf die beschriebene Weise eingestellt und von der Antriebseinrichtung 20 bereitgestellt wird, zumindest im Wesentlichen genau zum zweiten Zeitpunkt t2 und somit genau dann, wenn der Vierradantrieb 22 zugeschaltet ist, den Verlauf 44 und somit das Grenzdrehmoment schneidet, sodass vor Ablauf der Zuschaltzeit und insbesondere während der Zuschaltzeit eine besonders hohe Dynamik realisiert, jedoch ein Überschreiten des Grenzdrehmoments (Verlauf 44) durch das Moment (Verlauf 38) vermieden werden kann.

Des Weiteren ist es möglich, übermäßig frühe Zuschaltungen des Vierradantriebs 22 zu vermeiden, sodass das Kraftfahrzeug während seines Betriebs besonders lange in dem besonders effizienten Zweiradbetrieb betrieben werden kann. Dadurch kann ein besonders energieverbrauchsarmer Betrieb dargestellt werden.

## Patentansprüche

1. Verfahren zum Betreiben eines einen zu- und abschaltbaren Vierradantrieb (22) und eine Antriebseinrichtung (20) aufweisenden Kraftfahrzeugs während dessen Fahrt, bei welchem das Kraftfahrzeug mittels eines von der Antriebseinrichtung (20) bereitgestellten Drehmoments angetrieben und der zunächst abgeschaltete Vierradantrieb (22) zugeschaltet wird,
**gekennzeichnet durch** die Schritte:
- Ermitteln wenigstens eines Grenzdrehmoments, welches, während der Vierradantrieb abgeschaltet ist, von wenigstens einem mittels der Antriebseinrichtung angetriebenen Rad des Kraftfahrzeugs auf einen Untergrund, auf welchem das Kraftfahrzeug gefahren wird, übertragbar ist, während ein Schlupf zwischen dem wenigstens einen Rad und dem Untergrund einen vorgebbaren Schwellenwert unterschreitet;
- Ermitteln einer Zuschaltzeit (Z), welche erforderlich ist, um einen zeitlichen Verlauf des von der Antriebseinrichtung bereitgestellten Drehmoments derart einzustellen, dass das Drehmoment bei zugeschaltetem Vierradantrieb das Grenzdrehmoment überschreitet; und
- Einstellen des zeitlichen Verlaufs des Drehmoments in Abhängigkeit von der ermittelten Zuschaltzeit (Z).

2. Verfahren nach Anspruch 1,
**gekennzeichnet durch** die Schritte:
- Ermitteln wenigstens eines vom Fahrer des Kraftfahrzeugs angeforderten Soll-Werts des Drehmoments; und
- zumindest vorübergehendes Begrenzen des Drehmoments auf wenigstens einen gegenüber dem Soll-Wert geringeren Ist-Wert des Drehmoments in Abhängigkeit von der ermittelten Zuschaltzeit (Z).

3. Verfahren nach Anspruch 2,
**dadurch gekennzeichnet, dass**
das Drehmoment zumindest vor Ablauf der Zuschaltzeit (Z) auf den Ist-Wert begrenzt wird.

4. Verfahren nach Anspruch 2 oder 3,
**dadurch gekennzeichnet, dass**
nach Ablauf zumindest der Zuschaltzeit (Z) eine Erhöhung des Drehmoments von dem Ist-Wert auf den Soll-Wert freigegeben und das Drehmoment von dem Ist-Wert auf den Soll-Wert erhöht wird.

5. Verfahren nach Anspruch 4,
**dadurch gekennzeichnet, dass**
nach Ablauf der Zuschaltzeit (Z) und einer zusätzlichen, vorgebbaren Latenzzeit die Erhöhung freigegeben und das Drehmoment von dem Ist-Wert auf den Soll-Wert erhöht wird.

6. Verfahren nach einem der Ansprüche 2 bis 5,
**dadurch gekennzeichnet, dass**
das Drehmoment in Abhängigkeit von einer vorzuhaltenden Drehmomentreserve auf den Ist-Wert beschränkt wird.

7. Verfahren nach einem der vorhergehenden Ansprüche,
**dadurch gekennzeichnet, dass**
die Zuschaltzeit (Z) in Abhängigkeit von wenigstens einer Schließzeit ermittelt wird, welche zum Schließen wenigstens einer zum Zuschalten des Vierradantriebs (22) zu schließenden Kupplung (28, 30) erforderlich ist.

8. Verfahren nach einem der vorhergehenden Ansprüche,
**dadurch gekennzeichnet, dass**
die Zuschaltzeit (Z) in Abhängigkeit von wenigstens einer Beschleunigungszeit ermittelt wird, die erforderlich ist, um eine erste Welle (32) des Kraftfahrzeugs bei dem Zuschalten des Vierradantriebs (22) von einer ersten Drehzahl auf eine solche, gegenüber der ersten Drehzahl höhere zweite Drehzahl zu beschleunigen, dass in wenigstens einer Kupplung (30), über welche die erste Welle (32) beim Zuschalten des Vierradantriebs (22) mit wenigstens einer zweiten Welle (34) gekoppelt wird, eine Drehzahldifferenz vermieden wird.

9. Kraftfahrzeug, welches zum Durchführen eines Verfahrens nach einem der vorhergehenden Ansprüche ausgebildet ist.

## Claims

1. Method for operating a motor vehicle having a four-wheel drive (22) which can be switched on and off and a drive device (20) while travelling, in which the motor vehicle is driven by means of a torque provided by the drive device (20) and the four-wheel drive (22), which is initially switched off, is engaged,
**characterised by** the steps:
- determining at least one limiting torque, which, when the four-wheel drive is switched off, can be transmitted from at least one wheel of the motor vehicle driven by means of the drive device to a surface on which the motor vehicle is driven, when a slip between the at least one wheel and the surface falls below a predeterminable threshold value;
- determining an engagement time (Z), which is required in order to set a time characteristic of the torque provided by the drive device in such a way that the torque exceeds the limiting torque when the four-wheel drive is engaged; and
- setting the time characteristic of the torque as a function of the determined engagement time (Z).

2. Method according to claim 1,
**characterised by** the steps:
- determining at least one setpoint value of the torque requested by the driver of the motor vehicle; and
- at least temporarily limiting the torque to at least one actual torque value which is lower than the setpoint value as a function of the determined engagement time (Z).

3. Method according to claim 2,
**characterised in that**
the torque is limited to the actual value at least before the expiry of the engagement time (Z).

4. Method according to claim 2 or 3,
**characterised in that**
after the expiry of at least the engagement time (Z) an increase in the torque from the actual value to the setpoint value is enabled and the torque is increased from the actual value to the setpoint valve.

5. Method according to claim 4,
**characterised in that**
after the expiry of the engagement time (Z) and an additional, predeterminable latency period, the increase is enabled and the torque is increased from the actual value to the setpoint value

6. Method according to any of claims 2 to 5,
**characterised in that**
the torque is limited to the actual value as a function of a torque reserve to be provided.

7. Method according to any of the preceding claims,
**characterised in that**
the engagement time (Z) is determined as a function of at least one closing time, which is required for closing at least one clutch (28, 30) which is to be closed in order to engage the four-wheel drive (22).

8. Method according to any of the preceding claims,
**characterised in that**
the engagement time (Z) is determined as a function of at least one acceleration time which is required in order to accelerate a first shaft (32) of the motor vehicle when the four-wheel drive (22) is engaged from a first speed to a second speed, which is higher than the first speed, such that a speed difference is avoided in at least one clutch (30), via which the first shaft (32) is coupled to at least one second shaft (34) when the four-wheel drive (22) is engaged.

9. Motor vehicle, which is designed to carry out a method according to any of the preceding claims.

## Revendications

1. Procédé de fonctionnement d'un véhicule à moteur présentant une transmission à quatre roues motrices (22) enclenchable et débrayable et un dispositif de propulsion (20), pendant son trajet au cours duquel le véhicule à moteur est entraîné au moyen d'un couple fourni par le dispositif de propulsion (20) et est enclenché au moyen de la transmission à quatre roues motrices (22) initialement débrayée,
**caractérisé par** les étapes consistant à :
- déterminer au moins un couple limite qui, pendant que la transmission à quatre roues motrices est débrayée, peut être transmis à un sol sur lequel est conduit le véhicule à moteur par au moins une roue du véhicule à moteur entraînée au moyen du dispositif de propulsion pendant qu'un glissement entre la au moins une roue et le sol tombe en dessous d'une valeur seuil pouvant être prédéfinie ;
- déterminer un temps d'enclenchement (Z), lequel est nécessaire pour ajuster un profil temporel du couple fourni par le dispositif de propulsion de telle manière que le couple dépasse le couple limite lorsque l'entraînement à quatre roues motrices est enclenché ; et
- ajuster le profil temporel du couple en fonction du temps d'enclenchement (Z) déterminé.

2. Procédé selon la revendication 1,
**caractérisé par** les étapes consistant à :
- déterminer au moins une valeur de couple souhaitée demandée par le conducteur du véhicule à moteur ; et
- limiter au moins temporairement le couple à au moins une valeur réelle du couple qui est inférieure à la valeur souhaitée en fonction du temps d'enclenchement (Z) déterminé.

3. Procédé selon la revendication 2
**caractérisé en ce que**,
le couple est limité à la valeur réelle au moins avant l'écoulement du temps d'enclenchement (Z).

4. Procédé selon la revendication 2 ou 3,
**caractérisé en ce que**,
après écoulement d'au moins le temps d'enclenchement (Z), une augmentation du couple à partir de la valeur réelle jusqu'à la valeur souhaitée est autorisée et le couple est augmenté à partir de la valeur réelle jusqu'à la valeur souhaitée.

5. Procédé selon la revendication 4
**caractérisé en ce que**,
après écoulement du temps d'enclenchement (Z) et d'un temps de latence supplémentaire pouvant être prédéfini, l'augmentation est autorisée et le couple est augmenté à partir de la valeur réelle jusqu'à la valeur souhaitée.

6. Procédé selon l'une quelconque des revendications 2 à 5,
**caractérisé en ce que**,
le couple est limité à la valeur réelle en fonction d'une réserve de couple à maintenir.

7. Procédé selon l'une quelconque des revendications précédentes,
**caractérisé en ce que**,
le temps d'enclenchement (Z) est déterminé en fonction d'au moins un temps de fermeture, lequel est nécessaire à la fermeture d'au moins un embrayage (28, 30) à fermer afin d'enclencher la transmission à quatre roues motrices (22).

8. Procédé selon l'une quelconque des revendications précédentes,
**caractérisé en ce que**,
le temps d'enclenchement (Z) est déterminé en fonction d'au moins un temps d'accélération qui est nécessaire pour accélérer un premier arbre (32) du véhicule à moteur à partir d'un premier régime jusqu'à un second régime supérieur au premier régime lors de l'enclenchement de la transmission à quatre roues motrices (22), de sorte qu'une différence de régime est évitée dans au moins un embrayage (30) grâce auquel le premier arbre (32) est couplé à au moins un second arbre (34) lors de l'enclenchement de la transmission à quatre roues motrices (22).

9. Véhicule à moteur, lequel est réalisé pour mettre en oeuvre un procédé selon l'une quelconque des revendications précédentes.
